# EUROPÄISCHE PATENTANMELDUNG

(11) **EP 4 718 547 A1**
(43) Veröffentlichungstag der Anmeldung: **01.04.2026**
(21) Anmeldenummer: 24203611.9
(22) Anmeldetag: 30.09.2024
(51) Int. Cl.: H01M 10/04, H01M 50/244, B23K 37/04, B25B 5/00

(54) **VORRICHTUNG UND VERFAHREN ZUM ANDRÜCKEN VON FÜGEPARTNERN IM ZUGE EINER BATTERIEMODULMONTAGE**

(71) Anmelder: Grob-Werke GmbH & Co. KG, 87719 Mindelheim (DE)
(72) Erfinder: Wilbiller, Joshua, 87742 Dirlewang (DE)
(74) Vertreter: KASTEL Patentanwälte PartG mbB

(57) **Zusammenfassung**

Die Erfindung betrifft eine Andrückvorrichtung (10) zum Andrücken wenigstens eines ersten Fügepartners (14) an wenigstens einen zweiten Fügepartner (16) bei einem Fügen von Batteriezellen (18) und Zellverbindern (20) während einer Batteriemodulmontage. Um den Aufwand zum Einstellen oder zur Inbetriebnahme zu verringern und die Prozesssicherheit zu erhöhen, weist die erfindungsgemäße Andrückvorrichtung mehrere pneumatische Kolben (2, 22-1, 22-2), die dazu eingerichtet sind, im Betrieb ein gemeinsames Gasvolumen (24) zu bilden, und mehrere Niederhalter (26) auf, die dazu eingerichtet sind, mittels der pneumatischen Kolben (22, 22-1, 22-2) gleichzeitig gegen den wenigstens einen ersten Fügepartner (14) gedrückt zu werden.

## Beschreibung

Die Erfindung betrifft eine Andrückvorrichtung zum Andrücken wenigstens eines ersten Fügepartners an wenigstens einen zweiten Fügepartner bei einem Fügen von Batteriezellen und Zellverbindern während einer Batteriemodulmontage. Weiter betrifft die Erfindung eine Fügevorrichtung zum Fügen von Batteriezellen und Zellverbindern im Rahmen einer Batteriemodulmontage mit wenigstens einer solchen Andrückvorrichtung. Weiter betrifft die Erfindung ein Andrückverfahren zum Andrücken wenigstens eines ersten Fügepartners an wenigstens einen zweiten Fügepartner bei einem Fügen von Batteriezellen und Zellverbindern während einer Batteriemodulmontage. Schließlich betrifft die Erfindung ein Fügeverfahren zum Fügen von Batteriezellen und Zellverbindern bei einer Batteriemodulmontage unter Einsatz eines solchen Andrückverfahrens.

### Aus der Literaturstelle

[1] EP 3 345 717 A1
   sind eine Fügevorrichtung und ein Fügeverfahren zum Fügen von Zellverbindern und Batteriezellen bekannt, bei denen ein Andrücksystem mit einem einzelnen Niederhalter jede Fügestelle einzeln anfährt.

Zum allgemeinen technologischen Hintergrund zur Montage von Batteriemodulen wird auf folgende Literaturstelle verwiesen:
[2] Broschüre "Montageprozess eines Batteriepacks" der RWTH Aachen, heruntergeladen am 30.08.2024 unter https://www.pem.rwth-aachen.de/global/show_document.asp?id=aaaaaaaaaaoqiyk

Um Zellverbinder, wie z.B. Bleche oder Metalllaschen, und Batteriezellen miteinander zu fügen, wie z.B. zu schweißen, werden die Fügepartner bei einer Batteriezellmontage aneinandergedrückt. Im Bereich der Batteriemodulmontage findet häufig das Andrücken bzw. Herstellen des "Nullspalts" zwischen Zellverbinder / Zellkontaktiersystem und Batteriezelle, insbesondere prismatischer Batteriezelle und / oder Pouchzelle, mit einzeln mechanisch gefederten Niederhaltern statt. Diese Niederhalter sind je nach Modultyp der Batteriezellen in Reihe horizontal (=die Pole sind nicht obendrauf, sondern seitlich der Zelle angeordnet (Bladezelle, Pouchzelle)) oder vertikal (= Pole sind oben auf der Batteriezelle angeordnet (Prismatische Zelle, Pouchzelle)) angeordnet. Damit lassen sich Zellverbinder gleichzeitig an mehreren Fügestellen an Batteriezellen andrücken.

Zum Andrücken der Niederhalter werden i.d.R. ein oder mehr Druckfederpakete verwendet.

Die Anpresskräfte je Niederhalter müssen über die Vorspannung der Druckfederpakete einzeln via Abstimmscheiben oder einer Schraubverbindung eingestellt werden.

Die einzelnen Druckfederpakete je Niederhalter weisen aufgrund ihrer Fertigungstoleranzen eine hohe Streuung der Kräfte bei gleicher Vorspannung auf. Daher muss die Andrückkraft für jeden Niederhalter einzeln aufwendig eingestellt werden. Das führt zu einem hohen initialen Inbetriebnahme-, Einstell-und daher Kostenaufwand.

Je nach Kundenbauteil und Typisierung der Batteriemodulanlage, also je nach Anzahl der Batteriezellen sowie Positionierung der Batteriezellen zueinander im Modul - eventuell gibt es Störkonturen am Bauteil (z.B. Kunststoffnasen am Zellkontaktiersystem) - ist es möglich, dass bestimmte Niederhalter während des Prozesses typabhängig nicht angedrückt werden dürfen. Dies führt bei der Verwendung von Druckfedern zu einem erhöhten konstruktiven Aufwand und zusätzlichen Baugruppen, welche bestimmte Niederhalter typabhängig zurückhalten.

Einen Bruch einer Feder des Druckfederpakets und eine daraus resultierend geringere Andrückkraft kann während des Prozesses nicht erkannt werden. Dies kann zu einer erhöhten Ausschussquote der Anlage führen.

Es kann auch zu toleranzbedingten Höhenunterschieden bei den Batteriezellen kommen, die dazu führen können, dass die durch die mittels Druckfedern vorgespannten Niederhaltern ausgeübte Andrückkraft zu hoch oder zu niedrig ist.

Die Erfindung hat sich zur Aufgabe gestellt, eine verbesserte Vorrichtung und ein verbessertes Verfahren zum Andrücken wenigstens eines ersten Fügepartners an wenigstens einen zweiten Fügepartner bei einem Fügen von Batteriezellen und Zellverbindern während einer Batteriemodulmontage zur Verfügung zu stellen, bei denen insbesondere der Einstellaufwand reduziert und die Prozessstabilität erhöht werden. Weiter insbesondere sollen auch zusätzliche werkstücktypabhängige Baugruppen reduziert werden.

Diese und andere Aufgaben, die beim Lesen der nachfolgenden Beschreibung noch genannt werden oder vom Fachmann erkannt werden können, werden durch den Gegenstand der unabhängigen Ansprüche gelöst. Vorteilhafte Ausführungsformen und Weiterbildungen sind den Unteransprüchen und der nachfolgenden Beschreibung zu entnehmen.

Die Erfindung schafft gemäß einem ersten Aspekt davon eine Andrückvorrichtung zum Andrücken wenigstens eines ersten Fügepartners an wenigstens einen zweiten Fügepartner bei einem Fügen von Batteriezellen und Zellverbindern während einer Batteriemodulmontage, wobei die Andrückvorrichtung mehrere pneumatische Kolben, die dazu eingerichtet sind, im Betrieb ein gemeinsames Gasvolumen zu bilden, und mehrere Niederhalter aufweist, die dazu eingerichtet sind, mittels der pneumatischen Kolben gleichzeitig gegen den wenigstens einen ersten Fügepartner gedrückt zu werden.

Durch die pneumatischen Kolben werden die Niederhalter nun druckgesteuert, und nicht mehr weggesteuert verfahren. Das heißt, die Niederhalter werden jeweils so weit ausgefahren, bis ein vorbestimmter Druck erreicht wird. Somit ermöglicht die erfindungsgemäße Andrückvorrichtung einen Aufwand zum Einstellen oder zur Inbetriebnahme zu verringern und die Prozesssicherheit zu erhöhen.

Es sind demnach mehrere pneumatische Kolben vorgesehen, die insbesondere im Anpress-Betrieb ein gemeinsames Gasvolumen bilden. Beispielsweise bilden die Kolben gemeinsam zusammen mit Leitungen und einer Druckgasquelle das gemeinsame Gasvolumen. Mit anderen Worten nehmen die Kolben zumindest im Anpress-Betrieb an dem gemeinsamen Gasvolumen teil, jeder dieser Kolben bildet einen Teil des gemeinsamen Gasvolumens. Beispielsweise sind die Kolben zumindest im Anpressbetrieb an eine gemeinsame Druckgasquelle angeschlossen, die die einander zugeordneten pneumatischen Kolben mit einem gemeinsamen Gasdruck versorgt. Das Bilden eines gemeinsamen Gasvolumens kann durch unterschiedliche Weise geschehen. Beispielsweise sind die Kolben in Reihe geschaltet, wobei zwischen benachbarten Kolben jeweils eine im Betrieb offene Verbindungsleitung vorgesehen ist, so dass sich der Gasdruck aus einer Druckgasquelle über alle miteinander in Reihe geschalteten Kolben hinweg einstellt. Bei anderen Ausführungen sind die Kolben parallel geschaltet, insbesondere alle an eine gemeinsame Verteilerleitung angeschlossen. Die Leitungen können permanent offen sein und über ein zentrales Organ, z.B. Ventil oder Druckregler versorgt werden. Es ist aber auch möglich, mehrere Ventile vorzusehen, wobei eine Schaltlogik, beispielsweise eine Steuerung, insbesondere computerimplementiert, derart eingerichtet ist, dass sie die Ventile für den Betrieb so schaltet, dass die Kolben im Betrieb an eine gemeinsame Druckgasquelle angeschlossen sind und so das gemeinsame Gasvolumen bilden. Besonders bevorzugt werden an den einzelnen Kolben vorgesehene Ventile pneumatisch angesteuert, beispielsweise mit pneumatischen Steuerleitungen. Die Ventile können dabei in Reihe geschaltet sein.

In einigen Ausführungsformen umfasst die Andrückvorrichtung wenigstens einen an die im Anpress-Betrieb ein gemeinsames Gasvolumen bildenden Kolben angeschlossenen Druckregler zum Steuern einer Andrückkraft, mit der die mittels der Kolben bewegbaren Niederhalter gegen den wenigstens einen ersten Fügepartner drücken.

Bei einigen Ausführungsformen ist vorgesehen, dass 2 bis 100, insbesondere 10 bis 100, mehr insbesondere 20 bis 80 Niederhalter vorgesehen sind, die gemeinsam durch im Anpress-Betrieb ein gemeinsames Gasvolumen bildenden Kolben ansteuerbar sind.

Bei einigen Ausführungsformen ist vorgesehen, dass zusätzlich zu mehreren ersten Niederhaltern, die mittels der im Anpress-Betrieb ein gemeinsames Gasvolumen bildenden Kolben gemeinsam ansteuerbar sind, wenigstens ein oder mehrere zweite Niederhalter mit zugeordneten pneumatischen weiteren Kolben vorgesehen sind, die separat ansteuerbar sind. Es kann ein einzelner zweiter Niederhalter vorgesehen sein, wobei der eine oder mehrere Kolben, der den zweiten Niederhalter bewegt, separat mit (unterschiedlichem) Gasdruck versorgt werden kann. Die den zweiten Niederhaltern zugeordneten Kolben können aber wiederrum auch - wie die den ersten Niederhalter zugeordneten Kolben - ein gemeinsames (weiteres) Gasvolumen bilden, das separat zu dem Gasvolumen der ersten Kolben, mit (auch unterschiedlichem) Gasdruck versorgt werden kann. So können unterschiedliche, auch mehr als zwei, Gruppen von Niederhaltern gebildet werden, die unterschiedlich mit Druck versorgt werden können.

Bei einigen Ausführungsformen ist vorgesehen, dass jeder Niederhalter durch je wenigstens einen ersten Kolben und einen hierzu beabstandeten zweiten Kolben bewegbar ist. Vorzugsweise bilden die ersten Kolben und die zweiten Kolben eines jeden Niederhalters im Anpress-Betrieb ein gemeinsames Gasvolumen. Insbesondere kann so der Niederhalter gleichmäßig bewegt werden, wobei zwischen dem ersten und dem zweiten Kolben Platz für einen Fügevorgang, beispielsweise ein Kanal für einen Schweißstrahl, gebildet ist. Da der erste und der zweite Kolben ein gemeinsames Gasvolumen bilden, ist gewährleistet, dass an jedem Kolben pro Niederhalter derselbe Druck anliegt. Bei einigen Ausführungsformen reicht aber auch ein einzelner Kolben pro Niederhalter aus. Vorteilhaft weist dann der Kolben eine Ausnehmung zum Bilden des Platzes für den Fügevorgang auf. Beispielsweise ist der Kolben ringförmig mit Durchgangskanal ausgebildet oder bogenförmig oder U-förmig.

Bei einigen Ausführungsformen weist die Andrückvorrichtung eine Basis auf, an der die Niederhalter mittels der Kolben bewegbar geführt sind, wobei die Basis wenigstens einen Druckgasverteiler zum Verteilen von Druckgas an die Kolben aufweist, wobei der Druckgasverteiler einerseits an eine Druckquelle und andererseits an die Kolben angeschlossen ist. Es können auch mehrere Basen vorgesehen sein. Beispielsweise sind die Niederhalter auf mehreren Basen verteilt vorgesehen. Dies ist insbesondere bei sehr langen Andrückvorrichtungen vorteilhaft oder bei Andrückvorrichtungen, die mehrere unterschiedliche Gruppen von unterschiedlich anzusteuernden Niederhaltern bereitstellen.

Bei einigen Ausführungsformen ist vorgesehen, dass von den pneumatischen Kolben, die dazu eingerichtet sind, im Betrieb ein gemeinsames Gasvolumen zu bilden, wenigstens einer, mehrere oder alle mittels eines eigenen Ventils an eine gemeinsame Druckgasquelle schaltbar anschließbar sind. Bei einigen Ausführungsformen sind die Ventile in Reihe geschaltet. Bei einigen Ausführungsformen sind die Ventile pneumatisch gesteuert und beispielsweise durch selektives unter-Druck-Setzen oder Entlüften von pneumatischen Steueranschlüssen gemeinsam ansteuerbar.

Bei einigen Ausführungsformen werden die gemeinsam zu betätigenden Kolben an eine gemeinsame Druckquelle angeschlossen, während Kolben, die bauteilspezifisch nicht betätigt werden sollen, nicht an die Druckquelle angeschlossen werden. Dies kann durch Vorsehen bzw. nicht vorsehen von Druckverbindungsleitungen, z.B. an Bohrungen an der Basis geschehen. Somit ist eine einfache Anpassung an bauteilspezifische Gegebenheiten möglich.

Bei anderen Ausführungsformen können den Kolben zugeordnete Ventile gruppenweise oder einzeln angesteuert werden. Dann kann durch das jeweilige Ventil je nach Bedarf einer oder mehrere der Kolben von dem gemeinsamen Gasvolumen getrennt werden, so dass die zugeordneten Niederhalter dann nicht angedrückt werden. Die Ventile können mechanisch betätigbar sein, z.B. manuell.

Vorteilhaft sind die den Kolben zugeordnete Ventile signalgesteuerte Ventile, z.B. Magnetventile oder signalgesteuert pneumatisch schaltbare Ventile, wobei vorteilhaft eine Steuerung (insbesondere mit Prozessor und Speicher mit von dem Prozessor ausführbarem Programm) vorgesehen ist, mittels der das oder die Ventile nach vorgegebenen Ablaufprogrammen geöffnet oder geschlossen werden.

Bei einigen Ausführungsformen ist die Andrückvorrichtung ausgebildet als Schweißmaske, insbesondere derart, dass wenigstens einer, mehrere oder alle der Niederhalter einen Schweißstrahlkanal zum Durchführen eines Schweißstrahls zum Schweißen der Fügepartner aufweist.

Gemäß einem weiteren Aspekt schafft die Erfindung eine Fügevorrichtung zum Fügen von Batteriezellen und Zellverbindern im Rahmen einer Batteriemodulmontage, umfassend wenigstens eine Andrückvorrichtung nach einem der voranstehenden Ausgestaltungen und eine insbesondere als Schweißeinrichtung ausgebildete Fügeeinrichtung zum Aneinanderfügen der mittels der Andrückvorrichtung aneinandergedrückten Fügepartner. Bei einigen Ausführungsformen sind mehrere Fügeeinrichtungen, insbesondere Schweißeinrichtungen vorgesehen. Insbesondere wenn mehrere Andrückvorrichtungen vorgesehen sind, sind vorzugsweise auch mehrere Fügeeinrichtungen, insbesondere Schweißeinrichtungen vorgesehen. Die Schweißeinrichtung weist vorzugsweise einen Schweißlaser und eine Strahloptik zum Leiten des Schweißstrahls auf die unterschiedlichen Fügestellen, an denen die Niederhalter die Fügepartner aneinanderdrücken, auf. Anstelle eines Schweißverfahrens zum Fügen der Fügepartner kann auch ein anderes Fügeverfahren, wie beispielsweise Crimpen oder Schrauben, verwendet werden.

Bei einigen Ausführungsformen der Fügevorrichtung ist nur eine Andrückvorrichtung vorgesehen, wobei der zweite Fügepartner z.B. durch Halter, eine Gegenplatte oder - beim Fügen und Andrücken von oben - eine Bodenplatte gehalten wird und der erste Fügepartner mittels der Andrückvorrichtung gegen den zweiten Fügepartner angedrückt wird.

Bei einigen Ausführungsformen der Fügevorrichtung ist vorgesehen, dass wenigstens zwei der Andrückvorrichtungen vorgesehen sind, die einander gegenüberstehend angeordnet sind, so dass deren Niederhalter zum Andrücken aufeinander zu verfahren. So können z.B. Zellverbinder für Pluspole als erste Fügepartner auf einer ersten Seite mit einer ersten Andrückvorrichtung gegen eine Anordnung von Batteriezellen als zweite Fügepartner gedrückt werden, während Zellverbinder für Minuspole auf der gegenüberliegenden Seite der Batteriezellenanordnung mittels der zweiten Andrückvorrichtung gegen die Batteriezellen angedrückt werden.

Gemäß einem weiteren Aspekt schafft die Erfindung ein Andrückverfahren zum Andrücken wenigstens eines ersten Fügepartners an wenigstens einen zweiten Fügepartner beim Fügen von Batteriezellen mit Zellverbindern im Rahmen einer Batteriemodulmontage, umfassend:
Andrücken des wenigstens einen ersten Fügepartners mittels mehrerer Niederhalter gegen den wenigstens einen zweiten Fügepartner,
wobei die Niederhalter jeweils über pneumatische Kolben bewegt werden, die über eine gemeinsame Druckquelle mit dem gleichen Druck versorgt werden.

Beispielsweise kann ein einzelner erster Fügepartner, beispielsweise ein länglicher Zellverbinder, mittels mehrerer Niederhalter angedrückt werden. Sind mehrere erste Fügepartner anzudrücken, beispielsweise eine Mehrzahl von Zellverbindern, kann auch pro erster Fügepartner auch nur ein (oder mehrere) Niederhalter verwendet werden.

Bei einigen Ausführungsformen wird das Andrückverfahren durchgeführt mit einer Andrückvorrichtung nach einer der voranstehend erläuterten Ausgestaltungen.

Bei einigen Ausführungsformen des Andrückverfahrens werden wenigstens einer oder mehrere Zellverbinder gleichzeitig mittels der in Reihe angesteuerten Niederhalter gegen mehrere Batteriezellen gedrückt.

Die Zellverbinder sind bei einigen Ausführungsformen Kontaktbleche. Bei einigen Ausführungsformen sind die Zellverbinder Kontaktbleche mit FPC-Plättchen (FPC = flexible printed Circuit, d.h. flexible gedruckte Leiterplatten).

Bei einigen Ausführungsformen des Andrückverfahrens werden Zellverbinder an gegenüberliegenden Seiten der Batteriezellen gegen die Batteriezellen gedrückt.

Gemäß einem weiteren Aspekt schafft die Erfindung ein Schweißverfahren zum Verschweißen von Batteriezellen mit Zellverbindern umfassend ein Andrückverfahren nach einer der voranstehenden Ausgestaltungen.

Die Erfindung betrifft Vorrichtungen und Verfahren zum Andrücken eines Fügepartners an einen anderen im Rahmen einer Batteriemodulmontage. Insbesondere sollen als Fügepartner Zellverbinder und Batteriezellen miteinander gefügt werden, wozu einer dieser Fügepartner an den anderen anzudrücken ist.

Beispielsweise werden hierzu, wenn das Fügen per Schweißen erfolgt, Schweißmasken verwendet, die auf einen ersten Fügepartner, z.B. einen Zellverbinder, gedrückt werden, um diesen an den zweiten Fügepartner, z.B. eine Batteriezelle anzudrücken. Anschließend erfolgt das Fügen der so aneinandergedrückten Fügepartner z.B. durch Schweißen. Einige Andrückvorrichtungen sind somit als Schweißmaske oder Schweißmaskenandrücker ausgeführt.

Einige Ausführungsformen betreffen einen pneumatischen Schweißmaskenandrücker für Batteriemodule.

Ein solcher pneumatischer Schweißmaskenandrücker findet auf dem Gebiet der Batteriemodulmontage Anwendung.

Bei einigen Ausführungsformen wird der pneumatische Schweißmaskenandrücker beim Verschweißen von Zellverbindern / Zellkontaktiersystemen mit prismatischen und / oder Pouchbatteriezellen verwendet, insbesondere solchen Zellen, bei denen die Plus- und Minuspole nicht oben auf den Zellen, sondern seitlich, also horizontal, auf einander gegenüberliegenden Seiten angeordnet sind.

Bei einigen Ausführungsformen umfassen die Schweißmasken hierbei z.B. 1 bis 70, insbesondere mindestens zwei bis 70, Schweißmaskenandrücker (auch Niederhalter genannt), die dazu dienen, einen Zellverbinder an den jeweiligen Pol der Batteriezelle anzudrücken und miteinander zu verschweißen (zu kontaktieren). Hierbei wird bei einigen Ausführungsformen pro Seite der Zelle (der Pluspol und der Minuspol sind jeweils auf einander gegenüberliegenden Seiten der Zelle angeordnet) je eine Schweißmaske verwendet, sodass dieselbe Anzahl an Pluspolen (auf der einen Seite) und an Minuspolen (auf der gegenüberliegenden Seite) gleichzeitig mit im Wesentlichen demselben Druck angedrückt und verschweißt werden. Dadurch wird sichergestellt, dass sich die Anordnung der Batteriezellen nicht durch eine ungleiche Druckaufbringung (Druck nur auf einer Seite, oder auf einer Seite höher als auf der anderen Seite) zu verschieben.

Einige Ausführungsformen der Andrückvorrichtung oder des Andrückverfahrens weisen insbesondere einen, mehrere oder alle der folgenden Vorteile auf:
- eine gleichmäßige bzw. konstante Andrückkraft über alle zugeordneten (z.B. in Reihe befindlichen) Niederhalter wird erzeugt. Dadurch ergibt sich ein geringer Einstell- oder Inbetriebnahmeaufwand bei Andrückvorrichtungen, wie beispielsweise Schweißmaskenandrückern gemäß Ausführungsformen der Erfindung
- ein Zurückhalten bestimmter Niederhalter innerhalb der Andrückvorrichtung (beispielsweise Schweißmaske) ist möglich;
- Während des Fügevorgangs, wie insbesondere Schweißvorgangs, bzw. während des Andrückprozess kann die tatsächliche Andrückkraft überprüft bzw. überwacht werden. Während dem Prozess kann die Andrückkraft des Gesamtsystems z.B. über Druckschalter überwacht werden;
- Eine einfache Änderung der Andrückkraft ist möglich; zur Änderung der Andrückkraft muss nicht mehr die Vorspannung von Druckfedern wie zuvor händisch eingestellt werden, wie im Stand der Technik bspw. durch Einfügen oder Weglassen von Abstimmscheiben oder durch ein händisches Einstellen einer Schraubverbindung (zum Einstellen der Vorspannung)

Einige Ausführungsformen schaffen ein neues Schweißmaskenkonzept zur Reduzierung des Einstellaufwands bei gleichzeitiger Erhöhung der Prozessstabilität und vorzugsweise auch Reduzierung werkstücktypabhängiger zusätzlicher Baugruppen.

Ein besonderer Gedanke bei Ausführungsformen der Erfindung ist es, das Andrücken der Niederhalter über pneumatische Kolben umzusetzen, die ein gemeinsames Gasvolumen teilen oder bilden oder zusammen an eine gemeinsame Druckgasquelle angeschlossen sind. Bei einigen Ausführungsformen wird das Andrücken der Niederhalter über in Reihe befindliche pneumatische Kolben umgesetzt. Durch die ein gemeinsames Gasvolumen teilenden oder bildenden, beispielsweise in Reihe (oder parallel) geschalteten Kolben und dem Pascal'schen Prinzip, nach dem sich Druck eines Druckgases wie Druckluft in Gasen allseitig gleichmäßig ausbreitet, ist es möglich, dass an allen Andrückern (=Niederhaltern) annähernd dieselbe Kraft anliegt und diese Kraft gegebenenfalls - bei einigen Ausführungsformen - komfortabel mit einem Druckregler gesteuert werden kann.

Durch Anpassung des Andrückkonzepts und dem Ändern der Druckfederpakete durch das neue Andrückkonzept wird eine konstante Andrückkraft über alle an dem gemeinsamen Gasvolumen teilnehmenden, z.B. in Reihe befindlichen, Niederhaltern gewährleistet und dadurch der Inbetriebnahme- bzw. Einstellaufwand reduziert.

Eine Änderung der Andrückkraft kann durch den Gasdruck wie insbesondere Luftdruck des Systems geändert werden, ohne direkten Eingriff in die Andrückvorrichtung, z.B. die Schweißmaske.

Zudem bieten einige Ausführungsformen der Erfindung die Möglichkeit, einzelne Niederhalter durch eine Verschaltungslogik innerhalb der Andrückvorrichtung, z.B. Schweißmaske, zurückzuziehen und somit nicht an das Werkstück zu drücken.

Ein Zurückhalten bestimmter Niederhalter innerhalb der Andrückvorrichtung, z.B. Schweißmaske, ist werkstücktypabhängig möglich.

Bei einigen Ausführungsformen kann durch einen Druckschalter die Andrückkraft während des Prozesses überwacht werden. Anstelle oder zusätzlich zu dem Druckschalter kann auch wenigstens ein Drucksensor vorgesehen sein.

Eine Überwachung des Drucks ermöglicht die Erkennung von Ausfällen und/oder Fehlfunktionen (einzelner) Niederhalter während des Prozesses.

Bei bevorzugten Ausführungsformen erfolgt ein gleichzeitiges Andrücken von Zellkontaktiersystem und Batteriezellen in Reihe; insbesondere können ein oder mehrere Zellverbinder gleichzeitig an eine Gruppe, insbesondere eine Reihe, von Batteriezellen angedrückt werden. Es kann ein im Wesentlichen in horizontaler Richtung erfolgendes Andrücken von einer oder mehreren Seiten, oder in im Wesentlichen vertikaler Richtung von oben oder auch von unten erfolgen. Bei einigen Ausführungsformen ist die Andrückvorrichtung und/oder das Andrückverfahren dazu eingerichtet, Bladezellen bzw. Pouchzellen anzudrücken und zu verschweißen, welche in horizontaler Lage verschweißt werden sollen, wobei hier vorteilhaft von beiden Seiten gleichzeitig gedrückt wird, um zu vermeiden, dass bei einseitiger bzw. ungleicher Druckaufbringung das herzustellende Batteriemodul verschoben wird. Bei anderen Ausführungsformen wird einseitig gegen ein Gegenlager, wie Stützplatte, Bodenplatte oder dergleichen gedrückt.

Während im Stand der Technik nach [1] ein einzelner Andrücker verwendet wird, der mit hoher Taktzahl arbeiten muss, um von Fügestelle zu Fügestelle verfahren zu werden, ist bei der Andrückvorrichtung gemäß einigen Ausführungsformen der Erfindung vorgesehen, 2-100 (insbesondere 10-100, 20-80, 30-75 ...) Niederhalter gleichzeitig anzusteuern, wobei die Taktzeiten der Andrückvorrichtung weitaus geringer (also langsamer) als die Taktzeiten des Systems in [1] sein können. So ist ein Steuerungsprozess, insbesondere zur Positionierung der Niederhalter einfacher, also weniger komplex, als bei einem einzelnen Andrücker, der von Fügestelle zu Fügestelle verfahren werden muss.

Bei einigen Ausführungsformen wird durch Anpassung des Andrückkonzepts und dem Ändern der Druckfederpakete durch das neue Andrückkonzept eine konstante Andrückkraft über alle in Reihe befindlichen Niederhaltern, auch bei toleranzbedingten Höhenunterschieden zwischen einzelnen Batteriezellen, gewährleistet und dadurch der Inbetriebnahme- bzw. Einstellaufwand reduziert.

Bei einigen Ausführungsformen ist ein Zurückhalten bestimmter Niederhalter innerhalb einer Schweißmaske oder der gleichen Andrückvorrichtung werkstücktypabhängig möglich.

Bei einigen Ausführungsformen kann während des Prozesses die Andrückkraft des Gesamtsystems über Druckschalter überwacht werden.

Bei einigen Ausführungsformen ist ein einfaches Abändern der Andrückkraft durch einen Druckregler möglich.

Ausführungsbeispiele werden im Folgenden anhand der beigefügten Zeichnungen näher erläutert. Darin zeigt:
- Fig. 1: eine vereinfachte schematische Draufsicht auf eine Fügevorrichtung gemäß einer Ausführungsform mit einer Andrückvorrichtung gemäß einer ersten Ausführungsform bei einem Fügen von Zellverbindern mit Batteriezellen, wobei die Andrückvorrichtung als Blockschaubild dargestellt ist;
- Fig. 2: eine vereinfachte schematische Draufsicht auf eine Fügevorrichtung gemäß einer weiteren Ausführungsform mit einer ersten und zweiten Andrückvorrichtung gemäß einer zweiten Ausführungsform bei einem Fügen von Zellverbindern mit Batteriezellen, wobei die Andrückvorrichtungen als Blockschaubild dargestellt sind;
- Fig. 3: ein vereinfachtes schematisches Blockschaubild einer Andrückvorrichtung gemäß einer dritten Ausführungsform;
- Fig. 4: ein vereinfachtes schematisches Blockschaubild einer Andrückvorrichtung gemäß einer vierten Ausführungsform;
- Fig. 5: eine perspektivische Rückansicht einer Andrückvorrichtung gemäß einer fünften Ausführungsform;
- Fig. 6: eine perspektivische Vorderansicht der Andrückvorrichtung von Fig. 5;
- Fig. 7: eine Schnittdarstellung einer Fügevorrichtung mit einer Andrückvorrichtung nach den Fig. 5 und 6, wobei ein Schnitt durch einen Niederhalter sowie ein Kolbenpaar zum Bewegen des Niederhalters der Andrückvorrichtung bei einem Anpress-Betrieb dargestellt ist;
- Fig. 8: einen Schnitt durch die Andrückvorrichtung ähnlich Fig. 7 bei einem Betrieb, bei dem die Kolben eingefahren werden.

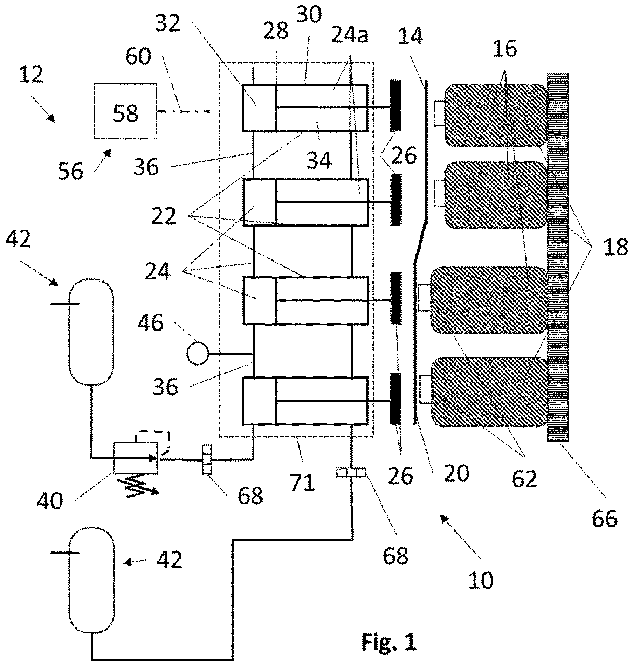

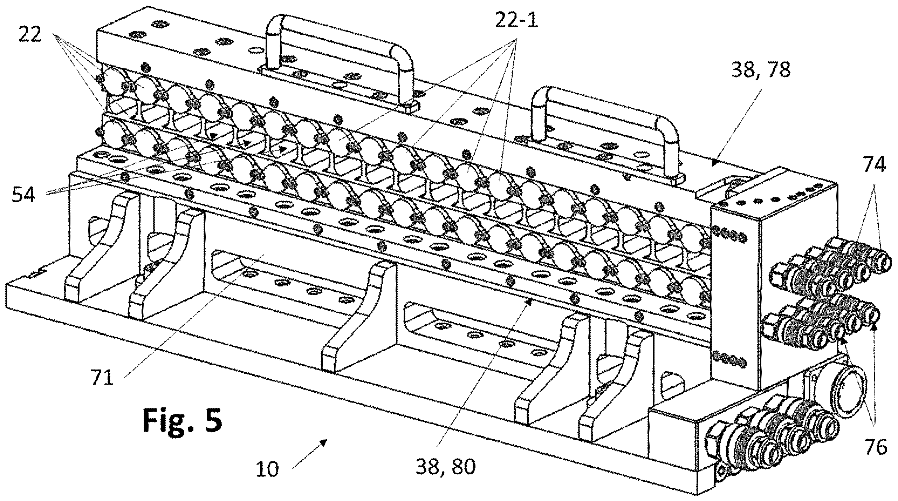

In den Figuren sind unterschiedliche Ansichten einer Andrückvorrichtung 10 gemäß unterschiedlichen Ausführungsformen gezeigt. In den Fig. 1 bis 4 ist die Andrückvorrichtung 10 in unterschiedlichen Ausführungen als vereinfachtes schematisches Blockschaltbild dargestellt. In den Fig. 1, 2 und 7 ist die Andrückvorrichtung 10 als Teil einer Fügevorrichtung 12 dargestellt. Die Fig. 5 bis 8 zeigen mehr detaillierte Darstellungen einer möglichen konkreten Ausführung der Andrückvorrichtung 10 in einer Ausbildung als Schweißmaske. Die im Folgenden erläuterten unterschiedlichen Merkmale der unterschiedlichen Ausführungsformen der Andrückvorrichtung 10 können beliebig miteinander kombiniert werden.

Wie in allen Figuren dargestellt, ist die Andrückvorrichtung 10 zum Andrücken wenigstens eines ersten Fügepartners 14 an wenigstens einen zweiten Fügepartner 16 bei einem Fügen von Batteriezellen 18 und Zellverbindern 20 während einer Batteriemodulmontage ausgebildet. Die Andrückvorrichtung 10 weist mehrere pneumatische Kolben 22 auf, die dazu eingerichtet sind, im Betrieb ein gemeinsames Gasvolumen 24 zu bilden. Weiter weist die Andrückvorrichtung 10 mehrere Niederhalter 26 auf, die dazu eingerichtet sind, mittels der das gemeinsame Gasvolumen 24 bildenden pneumatischen Kolben 22 gleichzeitig gegen den wenigstens einen ersten Fügepartner 14 gedrückt zu werden.

Die pneumatischen Kolben 22 (auch Zylinder genannt) sind mit Druckgas, wie insbesondere Druckluft, betriebene Linearaktoren mit einem Kolbenelement 28, das in einem Kolbengehäuse (Zylinderraum) 30 hin und her beweglich ist und mit dem Niederhalter 26 verbunden ist. Bei den dargestellten Ausführungen sind die Kolben 22 doppeltwirkend mit einer ersten Arbeitskammer 32 an einer Seite des Kolbenelements 28, die zum Ausfahren mit Druck versorgt wird und zum Einfahren entlüftet wird, und mit einer zweiten Arbeitskammer 34, die zum Einfahren mit Druck versorgt wird und zum Ausfahren entlüftet wird.

Die ersten Arbeitskammern 32 sind mit Verbindungsleitungen 36 und/oder mit wenigstens einer Verteilungsleitung 38 miteinander verbunden, um so das gemeinsame Gasvolumen 24 zu bilden. Mit anderen Worten sind die ersten Arbeitskammern 32 zumindest im Anpress-Betrieb Teil des gemeinsamen Gasvolumens 24.

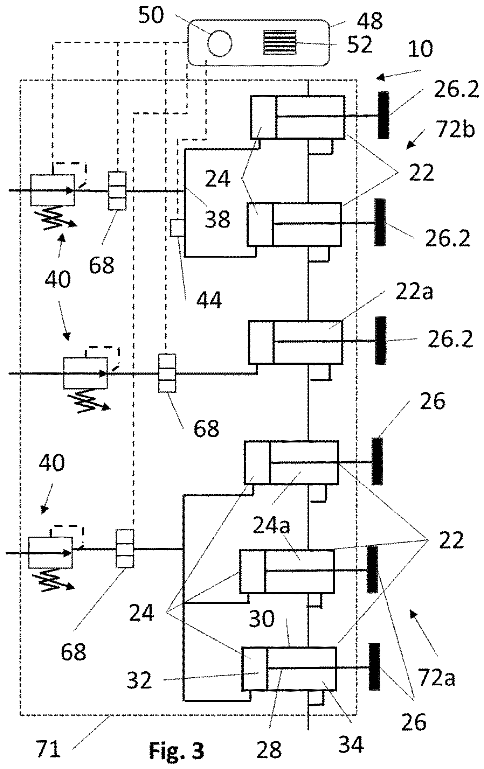

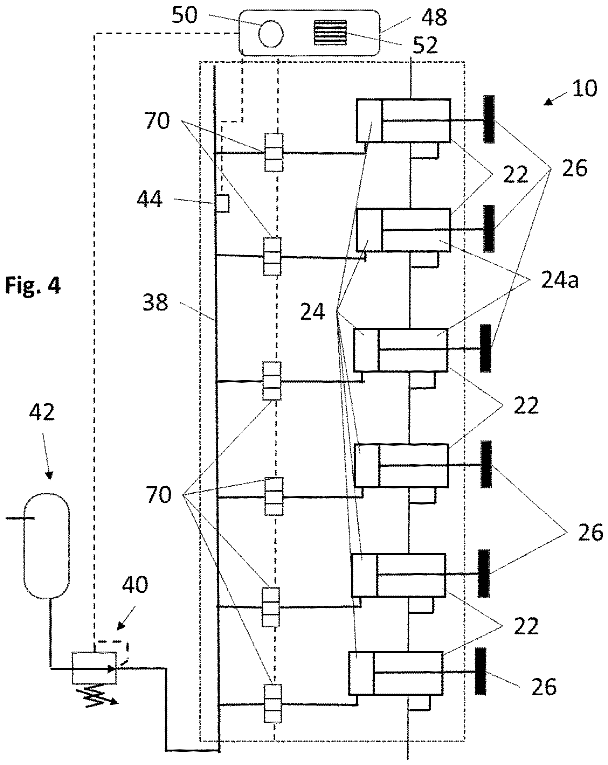

Das gemeinsame Gasvolumen 24 ist bei einigen Ausführungsformen über einen Druckregler 40 an eine Druckgasquelle 42 (z.B. Druckgasreservoir, Pumpe) angeschlossen. Bei einigen Ausführungsformen ist weiter ein Druckschalter 44 oder ein Drucksensor 46 an das gemeinsame Gasvolumen 24 angeschlossen. Der Druckregler 40 und gegebenenfalls der Druckschalter 44 oder der Drucksensor 46 sind an eine Steuerung 48 (beispielhaft dargestellt in den Fig. 3 und 4) angeschlossen. Die Steuerung 48 weist beispielsweise einen Prozessor 50 und einen Speicher 52 auf, in dem durch den Prozessor 50 ausführbare Programme gespeichert sind. Die Steuerung 48 kann Teil der Andrückvorrichtung 10, Teil der Fügevorrichtung 12 oder extern, insbesondere als Teil einer (nicht dargestellten) Anlagensteuerung für eine Batterieherstellanlage (nicht dargestellt) sein.

Über den Druckregler 40 lässt sich der Anpressdruck, mit dem die Kolben 22 den Niederhalter 26 andrücken, regeln oder einstellen. Mittels des Druckschalters 44 oder Drucksensors 46 lässt sich über den Druck die Funktion der Andrückvorrichtung 10 überwachen.

Bei einigen Ausführungsformen sind auch die zweiten Arbeitskammern 34 untereinander verbunden, um ein weiteres gemeinsames Gasvolumen 24a zum Zurückfahren zu bilden.

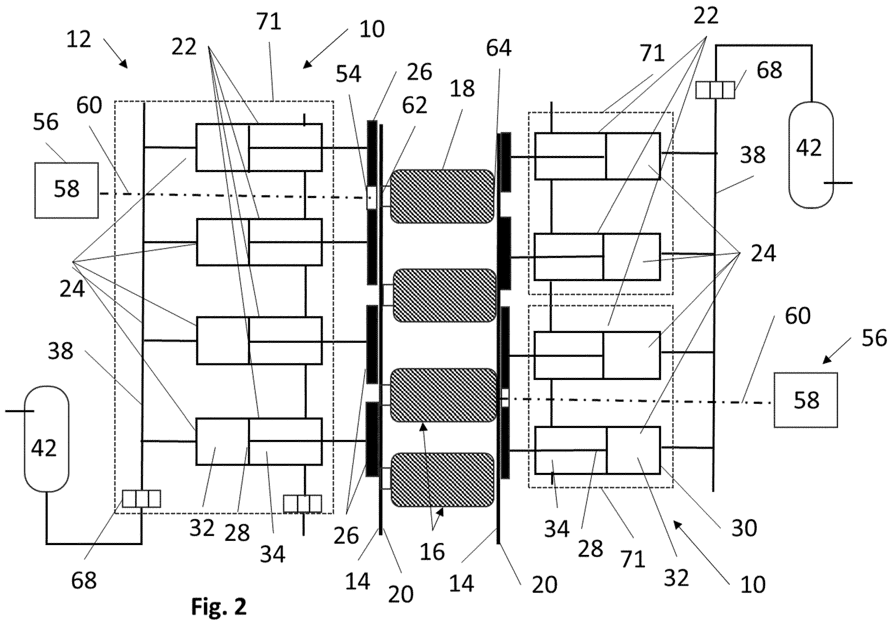

In den Fig. 1 bis 4 sind die Andrückvorrichtungen 10 jeweils in einer Ansicht senkrecht zur Verfahrrichtung dargestellt. Beispielsweise ist die Andrückvorrichtung 10 so angeordnet, dass die Kolben 22 im Wesentlichen horizontal bewegt werden. Beispielsweise sind die Andrückvorrichtungen 10 von oben gesehen dargestellt. Die Kolben 22 können jeweils paarweise angeordnet sein, wobei von jedem Kolbenpaar nur der obere Kolben zu sehen ist. Zwischen den Kolben 22 des Kolbenpaars kann dann eine Freimachung oder Durchgangsausnehmung, beispielsweise ein Durchgangskanal 54, gebildet sein, durch den hindurch das Fügen der Fügepartner erfolgen kann. Wie in Fig. 2 dargestellt, kann ein Niederhalter 26 auch durch mehrere der Kolben 22 gemeinsam bewegt werden. Dabei kann ein Durchgang auch zwischen seitlich benachbarten Kolben 22 gebildet sein.

Bei den dargestellten Ausführungen ist eine Fügeeinrichtung 56 der Fügevorrichtung 12 als Schweißeinrichtung ausgebildet, wobei beispielsweise ein Fügelaser oder Schweißlaser 58 vorgesehen ist, dessen Laserstrahl durch den jeweiligen Durchgangskanal 54 hindurch auf die zugeordnete Fügestelle leitbar ist. In den Fig. 1, 2 und 7 ist hierzu bei 60 jeweils ein möglicher Strahlengang für den Laserstrahl schematisch angedeutet

Die Andrückvorrichtung 10 weist jeweils wenigstens eine Reihe (oder auch eine andere gruppierte Anordnung) von Niederhaltern 26 auf, die mittels der das gemeinsame Gasvolumen 24 bildenden Kolben 22 gleichzeitig den wenigstens einen ersten Fügepartner 14 gegen den wenigstens einen zweiten Fügepartner 16 drücken. Insbesondere erfolgt das Andrücken an mehreren benachbarten Fügestellen gleichzeitig.

Die ersten Fügepartner 14 sind beispielsweise die Zellverbinder 20, die gegen Pole 62, 64 der Batteriezellen 18 - zweite Fügepartner 16 - gedrückt werden. Jeder Zellverbinder 20 kann durch wenigstens einen oder mehrere der Niederhalter 26 angedrückt werden. Sind mehrere Zellverbinder 20 anzudrücken, ist pro Zellverbinder 20 wenigstens ein Niederhalter 26 vorgesehen.

Wie in Fig. 1 gezeigt, kann eine einzelne Andrückvorrichtung 10 auf einer Seite vorgesehen sein, wobei auf der gegenüberliegenden Seite der Fügepartner 14, 16 ein Gegenlager 66, beispielsweise eine Stützplatte oder (beim Andrücken von oben nach unten) eine Bodenplatte, vorgesehen ist.

Bei anderen Ausführungsformen, wie beispielsweise in Fig. 2 gezeigt, drücken eine erste und eine zweite Andrückvorrichtung 10 auf gegenüberliegenden Seiten in Richtung gegeneinander, wobei die erste Andrückvorrichtung 10 die Zellverbinder 20 gegen Pluspole 62 drückt, um sie mit den Pluspolen 62 zu fügen, und die zweite Andrückvorrichtung 10 weitere Zellverbinder 20 gegen Minuspole 64 auf der gegenüberliegenden Seite drückt, um die weiteren Zellverbinder 20 mit den Minuspolen 64 zu fügen. Auf jeder Seite weist die Fügevorrichtung 12 wenigstens eine Fügeeinrichtung 56, beispielsweise jeweils einen Schweißlaser 58 auf.

Die das gemeinsame Gasvolumen bildenden Kolben 22, können, wie in Fig. 1 gezeigt, in Reihe geschaltet sein, wobei Verbindungsleitungen 36 zwischen den benachbarten Kolben 22 vorgesehen sind. Die Kolben 22 können aber auch, wie in Fig. 2 bis 4 dargestellt, parallel geschaltet sein, insbesondere an eine durchgängige Verteilerleitung 38 angeschlossen sein. Selbstverständlich sind auch Kombinationen von Parallelschaltung und Reihenschaltung möglich. Beispielsweise können alle oberen Kolben in Reihe geschaltet sein und alle unteren Kolben können in Reihe geschaltet sein, wobei die Reihen der oberen und unteren Kolben parallel an die gemeinsame Druckgasquelle 42 angeschlossen sind. Vielfältige andere Verbindungsmöglichkeiten zum Bilden eines gemeinsamen Gasvolumens 24 sind möglich.

Weiter können ein oder mehrere Ventile 68, 70 vorgesehen sein. Beispielsweise lässt sich durch wenigstens ein zentrales Ventil 68 die jeweilige Druckgasquelle 42 zum Ausfahren oder Einfahren zu- oder abschalten. Das wenigstens eine zentrale Ventil 68 ist insbesondere durch die Steuerung 48 gesteuert.

Wie in Fig. 3 dargestellt, können mehrere Gruppen 72a, 72b von Kolben 22 vorgesehen sein, wobei die Kolben 22 einer Gruppe jeweils ein gemeinsames Gasvolumen 24 mit eigener Druckeinstellung - siehe Druckregler 40 - bilden. Auch kann ein einzelner Kolben 22a gesondert angesteuert werden. Somit können zusätzlich zu ersten Niederhaltern 26, die gemeinsam bewegt werden, wenigstens einer oder mehrere zweite Niederhalter 26.2 vorgesehen sein, die zurückgehalten werden können oder auch mit einem anderen Anpressdruck angedrückt werden können.

Bei einigen Ausführungsformen, wie in Fig. 4 beispielhaft dargestellt, können einer, mehrere oder alle der Kolben 22, die dazu eingerichtet sind, ein gemeinsames Gasvolumen 24 zu bilden, mit einem eigenen Einzelventil 70 versehen sein. Jedes Einzelventil 70 ist vorzugsweise wie dargestellt durch die Steuerung 48 automatisch angesteuert. Das Ansteuern kann auf unterschiedliche Weise erfolgen, beispielsweise elektrisch bei Magnetventilen oder pneumatisch bei pneumatisch betätigten Ventilen, wie hiernach noch näher erläutert. Die Ventile 70 können z.B. in Reihe geschaltet sein. Durch das gemeinsame Ansteuern können alle Kolben 22 zum Bilden des gemeinsamen Gasvolumens 24 geschaltet werden. Um einzelne Niederhalter 26 zurückzuhalten, kann die Druckverbindung zwischen dem jeweils zugeordneten Ventil 20 und der Druckgasquelle 42 weggelassen werden.

Bei alternativen Ausgestaltungen kann auch das Ventil 70 eines oder mehrere der Kolben 22 einzeln angesteuert werden, um den Kolben 22 abzuschalten, so dass der zugeordnete Niederhalter 26 nicht betätigt wird.

Dadurch sind besonders einfach bauteilabhängige Anpassungen möglich. Auch ist es möglich, bei einer Inbetriebnahme der Andrückvorrichtung den Zugang zu einem oder mehreren der Kolben 22, die bei dem herzustellenden Werkstück nicht benötigt werden, wegzulassen oder permanent zu schließen, so dass nur die verbleibenden Kolben 22 das gemeinsame Gasvolumen 24 bilden.

Die Kolben 22 sind insbesondere in wenigstens einer Basis 71 geführt. Insbesondere können in der Basis 71 integral die Kolbengehäuse 30 ausgebildet sein, so dass nebeneinander Zylinderräume gebildet sind, in der die Kolbenelemente 28 bewegbar geführt sind und die zwischen sich und dem Kolbenelement 28 die Arbeitskammern 32, 34 ausbilden. Außerdem können in der Basis 71 zumindest ein Teil der Verbindungs- oder Verteilungsleitungen 36, 38 als Kanäle ausgebildet sein. Auch können diverse Bohrungen der dergleichen Anschlüsse vorgesehen sein, über deren Auswahl und Anordnung wahlweise Zugänge oder Verbindungen zu den Ventilen 70 und/oder den Arbeitsräumen 32, 34 geschaffen werden können. Wie in den Fig. 1, 3 und 4 gezeigt, kann pro Andrückvorrichtung 10 eine durchgehende Basis 71 vorgesehen sein. Wie in Fig. 2 rechts dargestellt, kann eine Andrückvorrichtung aber auch mehr als eine Basis 71 aufweisen. Die mehreren Basen können aneinander befestigt, z.B. miteinander verschraubt, sein.

Im Folgenden wird anhand der Fig. 5 bis 8 eine konkrete mögliche Ausführungsform der hier als pneumatischer Schweißmaskenandrücker ausgebildeten Andrückvorrichtung 10 näher erläutert.

Hier beispielhaft gezeigt ist eine Schweißmaske mit zwanzig in Reihe geschalteten Niederhaltern 26, die über eine als 4-Wege-Schaltung (als ein Beispiel) mit vier Anschlüssen/Kupplungen 74, die zum Ausfahren der Niederhalter 26 verwendet werden und vier Anschlüssen/Kupplungen 76, die zum Einfahren der Niederhalter 26 verwendet werden, ausgebildete Schaltung angesteuert werden. Dadurch ist eine individuelle Ansteuerbarkeit, bspw. das Zurückhalten einzelner Niederhalter, möglich.

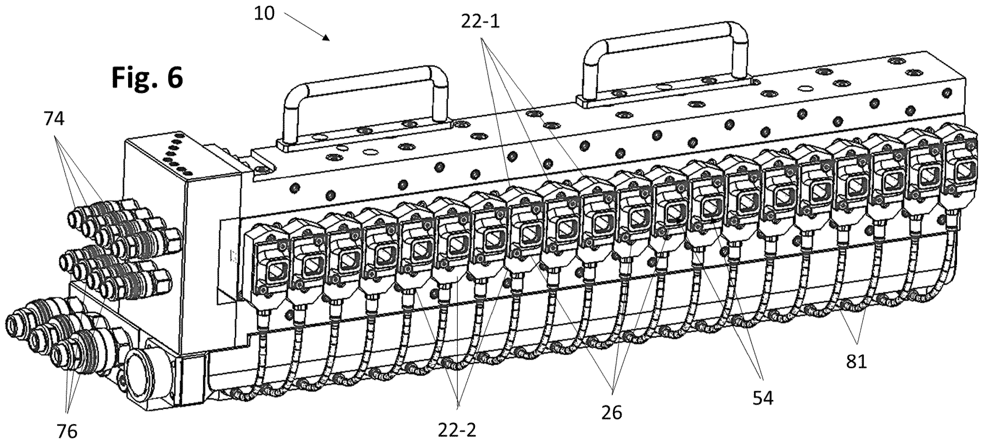

In Fig. 5 ist der Aufbau der pneumatischen Schweißmaske auf der Rückseite und in Fig. 6 ist der Aufbau der pneumatischen Schweißmaske auf der Vorderseite gezeigt.

Die Andrückvorrichtung 10 weist die Basis 71 auf, in der eine erste (beispielsweise obere) Reihe von pneumatischen Kolben 22, 22-1 - im Folgenden erste Kolben 22-1 genannt - und parallel hierzu eine zweite (beispielsweise untere) Reihe von pneumatischen Kolben 22, 22-2 - im Folgenden zweite Kolben 22-2 genannt - beweglich geführt sind. An einem Kopfende sind an der Basis 71 beispielsweise erste pneumatische Kupplungen als erste pneumatische Anschlüsse 74 zum Ausfahren und zweite pneumatische Kupplungen als zweite pneumatische Anschlüsse 76 zum Einfahren vorgesehen.

Wie in Fig. 6 gezeigt sind die Kolben 22-1, 22-2 beispielsweise paarweise angeordnet, so dass jeweils ein erster und ein zweiter Kolben 22-1, 22-2 gemeinsam einen Niederhalter 26 ansteuern. Insbesondere ist die Reihe von pneumatischen Niederhaltern 26 oder Andrückern dargestellt, die nebeneinander angeordnet sind und gleichzeitig betätigbar sind. Jeder Niederhalter 26 weist eine Freimachung - z.B. Durchgangskanal 54 - für den Fügelaser - Schweißlaser 58 - auf.

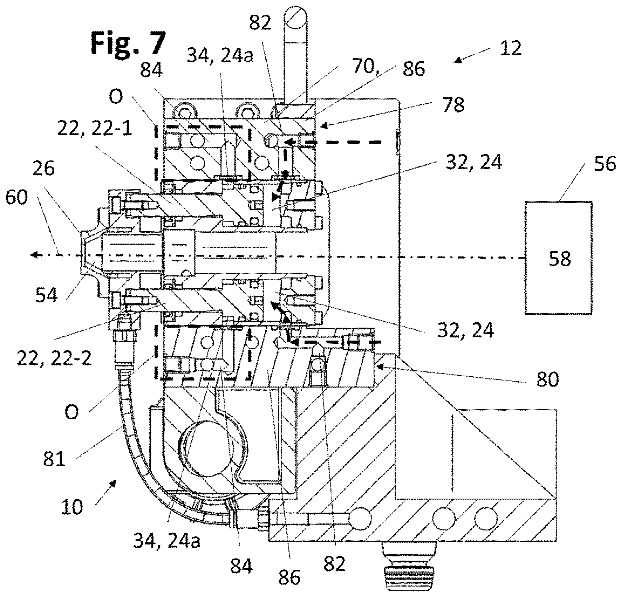

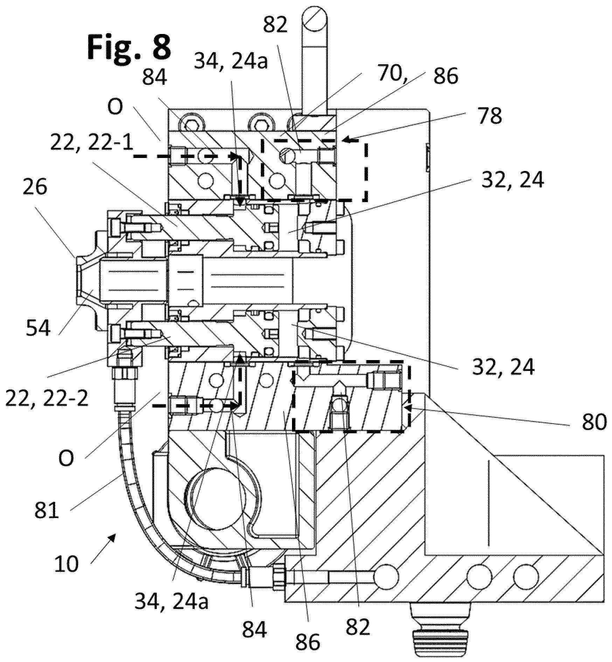

Fig. 7 und 8 zeigen Schnittdarstellungen der Andrückvorrichtung 10 gemäß den Fig. 5 und 6, wobei ein vertikaler Schnitt durch einen Niederhalter 26 und das zugeordnete Kolbenpaar 22-1, 22-2 dargestellt ist. In Fig. 7 ist die Andrückvorrichtung 10 als Teil der Fügevorrichtung 12 in einem Anpress-Betrieb dargestellt, in dem die Kolben 22-1, 22-2 ausgefahren werden, um das Fügen, insbesondere Schweißen, durchzuführen. In Fig. 8 ist die Antriebsvorrichtung in einem Betriebszustand gezeigt, in dem nach dem Andrücken das Einfahren der Kolben 22-1, 22-2 beginnt.

In den Fig. 7 und 8 sind der (hier obere) erste Kolben 22-1, ein erster Verteilerblock 78 für die ersten Kolben 22-1, ein zweiter Verteilerblock 80 für die unteren Kolben 22-2, die Freimachung - Durchgangskanal 54 - für den Schweißlaser 58 und eine optionale Schutzgaszufuhr 81 dargestellt. In den Verteilerblöcken 78, 80 sind jeweils eine erste Druckgaszuführung 82 (z.B. Druckluftzuführung) zum Versorgen der ersten Arbeitskammer 32 (Andrücken) und eine zweite Druckgaszuführung 84 (z.B. Druckluftzuführung) zum Versorgen der zweiten Arbeitskammer 34 (Einfahren) vorgesehen. Die Verteilerblöcke 78, 80 weisen beispielsweise pro Kolben 22, 22-1, 22-2 jeweils ein 3/2-Wege-Ventil 86 auf, um die Verschaltung zum Ausfahren/Andrücken und Einfahren/Zurückhalten zu realisieren.

Wenngleich der Betrieb selbstverständlich mit verschiedenen Druckgasen möglich ist, wird er im Folgenden anhand des Einsatzes von Druckluft beschrieben.

Gestrichelte Pfeile in Fig. 7 stellen die Strömungsrichtung der Druckluft für ein Ausfahren/Andrücken dar. Dabei sind die zweiten Druckluftzuführungen 84 offen, damit Luft aus den zweiten Arbeitskammern 34 gegebenenfalls entweichen kann. Gestrichelte Pfeile in Fig. 8 stellen die Strömungsrichtung der Druckluft für ein Einfahren/Zurückhalten dar. Dabei sind die ersten Druckluftzuführungen 82 offen, damit Luft gegebenenfalls aus den ersten Arbeitskammern 32 entweichen kann.

Im Folgenden wird die Funktionsweise des pneumatischen Schweißmaskenandrückers - Beispiel für Andrückvorrichtung 10 - anhand der Darstellungen der Fig. 5 bis 8 beschrieben.

Die pneumatischen Niederhalter 26 werden über die Kupplungen (Anschlüsse) 74 und 76 gesteuert. Je nach Verschaltlogik (beispielsweise Ansteuerungslogik der Niederhalter 26) und Typisierung des Batteriemoduls (insbesondere Anzahl der Batteriezellen 18, Positionierung der Batteriezellen 18 zueinander im Modul, eventuelle Störkonturen am Modul (z.B. Kunststoffnasen am Zellkontaktiersystem) können einzelne oder mehrere Niederhalter 26 ausgefahren oder zurückgehalten werden. Über den jeweiligen Verteilerblock 78 und 80 wird die Verschaltlogik über diverse Bohrungen in der Andrückvorrichtung 10 realisiert. Bei Ausführungen, bei denen pro Niederhalter 26 mehrere Kolben 22-1, 22-2 vorgesehen sind, wird die Verschaltlogik insbesondere derart ausgeführt, dass alle Kolben 22-1, 22-2 eines jeden Niederhalters 26 im Anpress-Betrieb ein gemeinsames Gasvolumen 24 bilden.

Die einfachste Ansteuerung der Niederhalter 26 entspricht einer Ausführungsform, bei der alle Niederhalter 26 über eine gemeinsame Druckluftleitung angesteuert werden - siehe z.B. Fig. 1 und 2. Bei dieser Ausführungsform ist es nicht möglich, einzelne Niederhalter 26 zurückzuhalten, während andere ausgefahren werden.

Um einzelne (zweite) Niederhalter 26.2 zurückhalten zu können, können diese über eine separate Druckluftleitung angesteuert werden - siehe z.B. Fig. 3. Das Zurückhalten von Niederhaltern 26.2 kann bspw. dann erforderlich sein, wenn mit einer Schweißmaske verschiedene Batteriemodule (verschiedene Anzahl und/oder verschiedene Anordnung der Batteriezellen im Modul) herstellbar sein sollen. Bei einigen Ausführungsformen bedeutet dies, dass bei der Herstellung/Inbetriebnahme der Schweißmaske bekannt sein sollte, welche Niederhalter 26 ggf. zurückgehalten werden sollen.

Bei einem Ausführungsbeispiel, sollen mit einer Schweißmaske Module mit zehn Zellen (Modul 1) und Module mit zwanzig Zellen (Modul 2) hergestellt werden können. Dann weist die Schweißmaske z.B. zwanzig Niederhalter 26 auf, und wenn das Modul 1 mit zehn Zellen hergestellt werden soll, müssen dann zehn Niederhalter 26 zurückgehalten werden.

Die Druckluft strömt gleichmäßig über den Verteilerblock 78 und 80 in den Kolbenraum - erste Arbeitskammer 32 - der pneumatischen Kolben 22-1 und 22-2 und drückt die Kolben 22, 22-1, 22-2 und somit die einzelnen Niederhalter 26 nach vorne an das Werkstück an. Durch das Pascal'sche Prinzip verteilt sich der Druck gleichmäßig an allen Niederhaltern 26. Der Druck innerhalb der Leitungen wird über einen Druckschalter 44 aktiv überwacht. Dabei kann mittels der Ausbildung der Verteilerblöcke 78, 80 und/oder mittels der Position des 3/2-WegeVentils 86, sowie der Anzahl an Druckluftleitungen in der Schweißmaske festgelegt werden, welche Niederhalter zusammen (oder separat) angesteuert werden. Das Pascal'sche Prinzip bzw. die druckbasierte Ansteuerung der Niederhalter 26 ermöglicht es, auch toleranzbedingte Höhenunterschiede der Batteriezellen auszugleichen (siehe die übertriebene Darstellung in Fig. 1), da die Niederhalter 26 so weit ausgefahren/angedrückt werden, bis die vorgegebene Andrückkraft (der vorgegebene Druck) erreicht ist. Somit ist gewährleistet, dass alle zu schweißenden Bauteile - Fügepartner 14, 16 - mit derselben Kraft niedergehalten werden und somit der Nullspalt entsteht. Mit anderen Worten kann man sagen, dass die Niederhalter 26 druckgesteuert und nicht weggesteuert sind. Der Fügelaser - Schweißlaser 58 - kann nun durch die Freimachungen - Durchgangskanal 54 - innerhalb der Niederhalter 26 die zu schweißenden Bauteile - Fügepartner 14, 16 - aufschmelzen und fügen, siehe Fig. 7. Sobald der Schweißprozess abgeschlossen ist, wird der Druckraum - erste Arbeitskammer 32 - der Kolben 22-1, 22-2 durch die erste Kupplung/den ersten Anschluss 74 entlüftet und über die zweite Kupplung/den zweiten Anschluss 76 Druck auf die Kolbenringfläche - zweite Arbeitskammer 34 - gegeben, sodass die Niederhalter 26 wieder einfahren.

Es ist somit ein Andrückverfahren zum Andrücken wenigstens eines ersten Fügepartners 14 an wenigstens einen zweiten Fügepartner 16 beim Fügen von Batteriezellen 18 mit Zellverbindern 20 im Rahmen einer Batteriemodulmontage beschrieben worden, umfassend den Schritt:
Andrücken des wenigstens einen ersten Fügepartners 14 mittels mehrerer Niederhalter 26 gegen den wenigstens einen zweiten Fügepartner 16,
wobei die Niederhalter 26 jeweils über pneumatische Kolben 22, 22-1, 22-2 bewegt werden, die über eine gemeinsame Druckquelle mit dem gleichen Druck versorgt werden.

### Bezugszeichenliste:

- 10: Andrückvorrichtung
- 12: Fügevorrichtung
- 14: erster Fügepartner
- 16: zweiter Fügepartner
- 18: Batteriezelle
- 20: Zellverbinder
- 22: pneumatischer Kolben
- 22-1: erste Kolben
- 22-2: zweite Kolben
- 22a: einzeln ansteuerbarer Kolben
- 24: gemeinsames Gasvolumen (Ausfahren)
- 24a: gemeinsames Gasvolumen (Einfahren)
- 26: Niederhalter
- 26.2: zweite Niederhalter
- 28: Kolbenelement
- 30: Kolbengehäuse
- 32: erste Arbeitskammer
- 34: zweite Arbeitskammer
- 36: Verbindungsleitung
- 38: Verteilerleitung
- 40: Druckregler
- 42: Druckgasquelle
- 44: Druckschalter
- 46: Drucksensor
- 48: Steuerung
- 50: Prozessor
- 52: Speicher
- 54: Durchgangskanal
- 56: Fügeeinrichtung
- 58: Schweißlaser
- 60: möglicher Strahlengang Schweißlaserstrahl
- 62: Pluspol
- 64: Minuspol
- 66: Gegenlager
- 68: zentrales Ventil
- 70: Einzelventil
- 71: Basis
- 72a: erste Gruppe von Kolben
- 72b: zweite Gruppe von Kolben
- 74: erste Anschlüsse (zum Ausfahren)
- 76: zweite Anschlüsse (zum Einfahren)
- 78: erster Verteilerblock
- 80: zweiter Verteilerblock
- 81: optionale Schutzgaszufuhr
- 82: erste Druckgaszuführung (für erste Arbeitskammer)
- 84: zweite Druckgaszuführung (für zweite Arbeitskammer)
- 86: 3/2-Wege-Ventil
- O: offen, damit Luft ggf. entweichen kann

## Patentansprüche

1. Andrückvorrichtung (10) zum Andrücken wenigstens eines ersten Fügepartners (14) an wenigstens einen zweiten Fügepartner (16) bei einem Fügen von Batteriezellen (18) und Zellverbindern (20) während einer Batteriemodulmontage, **gekennzeichnet durch** mehrere pneumatische Kolben (2, 22-1, 22-2), die dazu eingerichtet sind, im Betrieb ein gemeinsames Gasvolumen (24) zu bilden, und mehrere Niederhalter (26), die dazu eingerichtet sind, mittels der pneumatischen Kolben (22, 22-1, 22-2) gleichzeitig gegen den wenigstens einen ersten Fügepartner (14) gedrückt zu werden.

2. Andrückvorrichtung (10) nach Anspruch 1, **gekennzeichnet durch** wenigstens einen an die im Anpress-Betrieb ein gemeinsames Gasvolumen (24) bildenden Kolben (22, 22-1, 22-2) angeschlossenen Druckregler (40) zum Steuern einer Andrückkraft, mit der die mittels der Kolben (22, 22-1, 22-2) bewegbaren Niederhalter (26) gegen den wenigstens einen ersten Fügepartner (14) drücken.

3. Andrückvorrichtung (10) nach einem der voranstehenden Ansprüche, **dadurch gekennzeichnet,**
**dass** 2 bis 100, insbesondere 10 bis 100, vorzugsweise 20 bis 80 Niederhalter vorgesehen sind, die gemeinsam durch die im Anpress-Betrieb ein gemeinsames Gasvolumen (24) bildenden Kolben (22, 22-1, 22-2) ansteuerbar sind.

4. Andrückvorrichtung (10) nach einem der voranstehenden Ansprüche, **dadurch gekennzeichnet,**
**dass** zusätzlich zu mehreren ersten Niederhaltern (26), die mittels der im Anpress-Betrieb ein gemeinsames Gasvolumen (24) bildenden Kolben (22, 22-1, 22-2) gemeinsam ansteuerbar sind, wenigstens ein oder mehrere zweite Niederhalter (26.2) mit zugeordneten pneumatischen Kolben vorgesehen sind, die separat ansteuerbar sind.

5. Andrückvorrichtung (10) nach einem der voranstehenden Ansprüche, **dadurch gekennzeichnet,**
**dass** jeder Niederhalter (26) durch je wenigstens einen ersten Kolben (22-1) und einen hierzu beabstandeten zweiten Kolben (22-2) bewegbar sind, wobei die ersten Kolben (22-1) und die zweiten Kolben (22-1) eines jeden Niederhalters (26) im Anpress-Betrieb ein gemeinsames Gasvolumen (24) bilden.

6. Andrückvorrichtung (10) nach einem der voranstehenden Ansprüche **gekennzeichnet durch** eine Basis (71), an der die Niederhalter (26, 26.2) mittels der Kolben (22) bewegbar geführt sind, wobei die Basis (71) wenigstens einen Druckgasverteiler (36, 38, 78, 80) zum Verteilen von Druckgas an die Kolben (22, 22-1, 22-2) aufweist, wobei der Druckgasverteiler (36, 38, 78, 80) einerseits an eine Druckquelle (42, 74, 76) und andererseits an die Kolben (22, 22-1, 22-2) angeschlossen ist.

7. Andrückvorrichtung (10) nach einem der voranstehenden Ansprüche, **dadurch gekennzeichnet,**
**dass** von den pneumatischen Kolben (22), die dazu eingerichtet sind, im Betrieb ein gemeinsames Gasvolumen (24) zu bilden, wenigstens einer, mehrere oder alle mittels eines eigenen Ventils (70) an eine gemeinsame Druckgasquelle (42, 74) schaltbar anschließbar sind.

8. Andrückvorrichtung (10) nach einem der voranstehenden Ansprüche, ausgebildet als Schweißmaske, insbesondere derart, dass wenigstens einer, mehrere oder alle der Niederhalter (26) einen Schweißstrahlkanal (54) zum Durchführen eines Schweißstrahls zum Schweißen der Fügepartner aufweist.

9. Fügevorrichtung (12) zum Fügen von Batteriezellen (18) und Zellverbindern (20) im Rahmen einer Batteriemodulmontage, umfassend wenigstens eine Andrückvorrichtung (10) nach einem der voranstehenden Ansprüche und eine insbesondere als Schweißeinrichtung ausgebildete Fügeeinrichtung (56) zum Aneinanderfügen der mittels der Andrückvorrichtung (10) aneinandergedrückten Fügepartner (14, 16).

10. Fügevorrichtung (12) nach Anspruch 9, **dadurch gekennzeichnet,**
**dass** wenigstens zwei der Andrückvorrichtungen (10) vorgesehen sind, die einander gegenüberstehend angeordnet sind, so dass deren Niederhalter (26) zum Andrücken aufeinander zu verfahren.

11. Andrückverfahren zum Andrücken wenigstens eines ersten Fügepartners (14) an wenigstens einen zweiten Fügepartner (16) beim Fügen von Batteriezellen (18) mit Zellverbindern (20) im Rahmen einer Batteriemodulmontage, umfassend Andrücken des wenigstens einen ersten Fügepartners (14) mittels mehrerer Niederhalter (26) gegen den wenigstens einen zweiten Fügepartner (16),
wobei die Niederhalter (26) jeweils über pneumatische Kolben (22, 22-1, 22-2) bewegt werden, die über eine gemeinsame Druckquelle (42, 74) mit dem gleichen Druck versorgt werden.

12. Andrückverfahren nach Anspruch 11, durchgeführt mit einer Andrückvorrichtung (10) nach einem der Ansprüche 1 bis 8.

13. Andrückverfahren nach einem der Ansprüche 11 oder 12, wobei wenigstens einer oder mehrere Zellverbinder (20) gleichzeitig mittels der gemeinsam pneumatisch angesteuerten Niederhalter (26) gegen mehrere Batteriezellen (18) gedrückt werden.

14. Andrückverfahren nach Anspruch 13, wobei Zellverbinder (20) an gegenüberliegenden Seiten der Batteriezellen (18) gegen die Batteriezellen (18) gedrückt werden.

15. Schweißverfahren zum Verschweißen von Batteriezellen (18) mit Zellverbindern (20) umfassend ein Andrückverfahren nach einem der Ansprüche 11 bis 14.
